# EUROPÄISCHE PATENTSCHRIFT

(11) **EP 1 756 511 B1**
(45) Veröffentlichungstag und Bekanntmachung des Hinweises auf die Patenterteilung: **04.03.2009**
(21) Anmeldenummer: 05752786.3
(22) Anmeldetag: 06.06.2005
(51) Int. Cl.: G01B 7/06

(54) **KALIBRIERVORRICHTUNG ZUR ANPASSUNG EINER MESSEINRICHTUNG ZUR MESSUNG DER DICKE VON SCHICHTEN AUF EINEM MESSGEGENSTAND**
CALIBRATING DEVICE FOR ADAPTING A MEASURING DEVICE FOR MEASURING THE THICKNESS OF THIN LAYERS ON AN OBJECT TO BE MEASURED
DISPOSITIF D'ETALONNAGE POUR ADAPTER UN DISPOSITIF DE MESURE, AFIN DE MESURER L'EPAISSEUR DE COUCHES MINCES SUR UN OBJET MESURE

(30) Priorität: 07.06.2004 DE 202004008995 U
(43) Veröffentlichungstag der Anmeldung: 28.02.2007
(73) Patentinhaber: Immobiliengesellschaft Helmut Fischer GmbH & Co. KG, 71069 Sindelfingen (DE)
(72) Erfinder: FISCHER, Helmut, CH-6315 Oberägeri (CH)
(74) Vertreter: Maser, Jochen
(86) Internationale Anmeldenummer: PCT/EP2005/006037
(87) Internationale Veröffentlichungsnummer: WO 2005/121695

(56) Entgegenhaltungen:
- DE-A1- 3 404 720
- DE-A1- 19 702 950
- FR-A- 2 344 906
- US-A- 2 901 829

## Beschreibung

Die Erfindung betrifft eine Kalibriervorrichtung zur Anpassung einer Messeinrichtung zum Messen der Dicke von Schichten auf einem Messgegenstand mit einer Kalibrierfläche, welche eine ebene Oberseite und eine ebene Unterseite aufweist, die in einem vorbestimmten Abstand zueinander vorgesehen sind.

Aus einem Prospekt der Firma Helmut Fischer GmbH & Co. KG Institut für Elektronik und Messtechnik ist ein gattungsgemäßes Handmessgerät zur Schichtdickenmessung bekannt. Diese zerstörungsfreie, schnelle und präzise Schichtdickenmessung ist zum Einsatz der Messung von Schichten vorgesehen. Die Schichtdickenmessung umfasst einen Bereich von wenigen µm bis beispielsweise 2000 µm.

Zur Messung der Dicke von Schichten wird in Abhängigkeit des Messgegenstandes beziehungsweise des Grundwerkstoffes das Messverfahren ausgewählt. Nichtmagnetische Schichten auf ferromagnetischem Grundwerkstoff, wie beispielsweise Zink, Chrom, Kupfer, Zinn beziehungsweise Farbe, Lack, Kunststoff, Email auf Eisen oder Stahl, werden nach dem magnetinduktiven Verfahren gemessen. Elektrisch nicht leitende Schichten auf Nichteisenmetallen, wie beispielsweise Farbe, Lacke oder Kunststoff auf Aluminium, Messing oder Zink sowie anodisierte Schichten auf Aluminium, werden durch das Wirbelstromverfahren ermittelt.

Zur Durchführung der Messung ist vorgesehen, dass eine Messsonde, die über eine Signalleitung oder Funk mit der Messeinrichtung verbunden ist, auf die zu messende Schicht des Messgegenstandes aufgesetzt wird. Nach einer kurzen Messzeit zum Beispiel weniger als eine Sekunde wird der Messwert erfasst und über ein Display von der Messeinrichtung ausgegeben.

Zur exakten Messung der Schichtdicke ist erforderlich, dass die Messeinrichtung auf den jeweiligen Messgegenständen zumindest normiert oder kalibriert wird, wie beispielsweise aus der DE 34 04 720 A1 hervorgeht. Eine Normierung ist notwendig, sobald sich die Eigenschaften des Messgegenstandes nur geringfügig geändert haben. Durch die Normierung kann eine Nullpunktverschiebung einer Sondenkennlinie erfolgen, welche für die jeweilige Sonde kalibriert in der Messeinrichtung abgelegt ist. Durch eine Kalibrierung wird die Differenz zwischen Sollwerten und Istwerten festgestellt und bereinigt, wobei der Istwert der am Messgerät angezeigte Wert ist und der Sollwert der einem Kalibriernormalen entsprechende Wert ist. Unterschiede in der Permiabilität beziehungsweise der elektrischen Leitfähigkeit des Grundwerkstoffes können durch eine Kalibrierung berücksichtigt werden. Hierbei wird eine Kalibriervorrichtung in Form einer Folie verwendet, um die Messeinrichtung auf die Messaufgabe beziehungsweise den Messgegenstand einzujustieren.

Sofern die Geometrie des Messgegenstandes sehr stark von Normalbedingungen abweicht, kann des Weiteren eine Masterkalibrierung durchgeführt werden. Hierbei werden ebenfalls Kalibriervorrichtungen, beispielsweise vier Kalibrierfolien mit jeweils unterschiedlicher Dicke verwendet, um eine sogenannte Masterkalibrierung unter Berücksichtigung von vier Kalibrierwerten durchzuführen.

Zur Durchführung der Kalibrierung werden diese Kalibrierfolien auf einer ebenen Fläche des Messgegenstandes aufgelegt. Bei unachtsamer Handhabung kann sich ein Luftspalt zwischen der Kalibrierfolie und der Oberfläche des Messgegenstandes bilden, wodurch die Kalibrierung fehlerbehaftet wird. Die Kalibrierung von gekrümmten Oberflächen ist aufgrund der Größe und der flächenförmigen Ausgestaltung der Kalibrierfolie zeitaufwändig und bedarf gewisser Erfahrung.

Der Erfindung liegt deshalb die Aufgabe zugrunde, eine Kalibriervorrichtung zu schaffen, welche eine Kalibrierung einer Messeinrichtung zum Messen der Dicke von Schichten für Messgegenstände mit ebener und gekrümmter Oberfläche in einfacher und sicherer Weise ermöglicht.

Diese Aufgabe wird erfindungsgemäß durch die Merkmale des Anspruchs 1 gelöst. Weitere vorteilhafte Ausgestaltungen und Weiterbildungen der Erfindung sind in den weiteren Ansprüchen angegeben.

Durch die erfindungsgemäße Ausgestaltung der Kalibriervorrichtung ist ermöglicht, dass die Kalibrierfläche gegenüber einem Randbereich quasi frei bewegbar angeordnet und über zumindest einen Übergangsbereich gehalten ist. Dadurch wird die Bildung eines Luftpolsters vermieden. Die Luft kann zusätzlich zwischen dem Randbereich und der Kalibrierfläche entweichen. Gleichzeitig ist ermöglicht, dass die Kalibrierfläche über einen Übergangsbereich aus der Ebene des Randbereichs zumindest teilweise herausschwenkbar aufgenommen ist, wodurch insbesondere bei gekrümmten Gegenständen erzielt wird, dass nach Aufsetzen der Messsonde auf die Kalibrierfläche ausschließlich ein Anliegen der Kalibrierfläche auf dem Gegenstand im Aufsetzpunkt der Meßsonde zum Messgegenstand gegeben ist. Durch diese erfindungsgemäße Kalibriervorrichtung kann somit bei der Kalibrierung eines Gegenstandes mit einer ebenen zu prüfenden Oberfläche die Bildung eines Luftspaltes vermieden werden und bei gekrümmten Oberflächen eines Messgegenstandes eine definierte Anlage erzielt werden.

Nach einer vorteilhaften Ausgestaltung der Erfindung ist vorgesehen, dass die Kalibrierfläche zumindest teilweise von dem Randbereich umgeben ist. Dadurch kann die Kalibrierfläche geschützt angeordnet sein und die Handhabung ist erleichtert, ohne die Kalibrierfläche zu berühren.

Die Größe der KalibrierfläChe der Kalibriervorrichtung ist nach einer vorteilhaften Ausführungsform gleich oder zumindest geringfügig größer als eine Aufsetzkalotte einer Messsonde ausgebildet. Dadurch wird die Kalibrierfläche sehr klein ausgebildet, wodurch beim Aufsetzen auf eine Ebene ein leichtes Verdrängen der sich darunter befindenden Luft ermöglicht wird und ein schnelles Anliegen sichergestellt ist. Beim Kalibrieren einer gekrümmten Oberfläche ist eine leichte Auslenkung der Kalibrierfläche aus der nicht belasteten Position nach dem Aufsetzen der Messsonde ermöglicht, sofern dies erforderlich sein sollte.

Vorteilhafterweise ist vorgesehen, dass die Kalibrierfläche gleich oder zumindest geringfügig größer als die Sondenspitze oder das Gehäuse der Sondenspitze ausgebildet ist. Dadurch ist ein einfaches und kontrolliertes Aufsetzen gegeben. Gleichzeitig wird dem Benutzer die Position zum Aufsetzen der Messsonde gekennzeichnet, um die Kalibrierung durchzuführen.

Nach einer weiteren vorteilhaften Ausgestaltung der Erfindung ist vorgesehen, dass die Kalibrierfläche kreisförmig ausgebildet ist. Dadurch wird die Positionierung der Messsonden, die zumeist ein rundes Gehäuse umfassen, erleichtert. Ein konzentrischer Kreis um das Zentrum der beweglichen Zunge erleichtert das definierte Aufsetzen der Messsonde.

Nach einer vorteilhaften Ausgestaltung der Erfindung ist vorgesehen, dass die Kalibrierfläche, der Randbereich und der Übergangsbereich aus einem flächenförmigen Material hergestellt sind und die Kalibrierfläche und der Randbereich durch einen schlitzförmigen Spalt zumindest abschnittsweise getrennt sind. Dies ermöglicht eine einfache und kostengünstige als auch präzise Herstellung der Kalibriervorrichtung. Durch die Verwendung von einem flächenförmigen Material kann eine einteilige Kalibriervorrichtung hergestellt werden, bei der die Kalibrierfläche durch den Übergangsbereich mit dem zumindest abschnittsweise die Kalibrierfläche umgebenden Randbereich verbunden ist. Dadurch ist auch eine einfache Handhabung gegeben.

Die Kalibrierfläche, die den Randbereich und den Übergangsbereich enthält, ist vorteilhafterweise aus einem flächenförmigen Material mit konstanter Dicke ausgebildet. Dies weist den Vorteil auf, dass die Kalibriervorrichtung unabhängig von ihrer Ausrichtung auf dem Messgegenstand aufgelegt wird. Darüber hinaus ist die Herstellung vereinfacht, da ein flächenförmiges Material mit konstanter Dicke verwendet wird, welches zudem eine besonders gleichmäßige Dicke auf einer definierten Fläche besitzt.

Nach einer vorteilhaften Ausgestaltung der Erfindung ist vorgesehen, dass zumindest in einer Längs- oder Querachse des Übergangsbereiches zumindest eine schlitzförmige Durchbrechung außerhalb der Kalibrierfläche vorgesehen ist. Diese Durchbrechung wird als Sichtfenster beim Aufsetzen der Kalibriervorrichtung auf eine gekrümmte Oberfläche verwendet. Dadurch kann eine exakte Ausrichtung ermöglicht und erleichtert sein. Zusätzlich kann diese Durchbrechung beim Aufsetzen der Kalibriervorrichtung auf eine ebene Fläche zur Ableitung von eingeschlossener. Luft dienen.

Nach einer ersten alternativen Ausführungsform der Erfindung ist vorgesehen, dass der Übergangsbereich stegförmig ausgebildet ist. Dadurch wird die Kalibrierfläche als eine Art taumelnde Scheibe aufgenommen. Es ist somit ermöglicht, dass die Kalibrierfläche aus der Ebene heraus sowohl in Richtung einer Z-Achse als auch durch eine rotatorische Bewegung um eine Längsachse des stegförmigen Übergangsbereich auslenkbar ist. Dadurch wird der Kalibrierfläche eine hohe Bewegungsfreiheit aus der Ebene der Kalibriervorrichtung heraus ermöglicht.

Die stegförmigen Übergangsbereiche weisen vorteilhafterweise eine schlitzförmige Durchbrechung auf. Dadurch kann neben der vorteilhaften Ausgestaltung eines Sichtfensters des weiteren bewirkt werden, dass dieser stegförmige Übergangsbereich in seiner Breite verringert ist und dass zwischen der Durchbrechung und dem schlitzförmigen Spalt des Stegbereiches Arme ausgebildet werden, welche ein Auslenken und/oder ein Tordieren erleichtern und die Kalibrierfläche flexibel aufnehmen.

Nach einer weiteren vorteilhaften Ausführungsform der Erfindung ist vorgesehen, dass durch einen schneckenlinienförmigen oder schraubenlinienförmigen Spalt der Übergangsbereich kreisringförmig beziehungsweise ringförmig ausgebildet ist. Der schlitzförmige Spalt erstreckt sich um eine Kalibrierfläche, beispielsweise entlang eines Dreiviertelkreises, und setzt sich kreis-, ringförmig oder schraubenlinienförmig nach außen fort. Dadurch entsteht eine Art kreis-, ringförmiger oder daran angenäherter Übergangsbereich. Die Kalibrierfläche ist flexibel aufgenommen und in mehrere Richtungen aus der Ebene der Kalibriervorrichtung heraus auslenk- und schwenkbar.

Vorteilhafterweise ist vorgesehen, dass ein Teil des schnecken- oder schraubenförmigen Spalts im kreisförmigen oder ringförmigen Übergangsbereich eine schlitzförmige Durchbrechung als Sichtfenster darstellt.

Des weiteren kann vorteilhafterweise vorgesehen sein, dass in dem zumindest teilweise die Kalibrierfläche umgebende Randbereich zumindest eine Durchbrechung vorgesehen ist, um beim Auflegen der Kalibriervorrichtung auf ebene Gegenstände ein erleichtertes Verdrängen der Luft zu erzielen.

Der schlitzförmige Spalt zur zumindest abschnittsweisen Ausbildung der Kalibrierfläche und des Randbereiches ist gemäß einer vorteilhaften Ausgestaltung der Erfindung durch Laserschneiden, Wasserstrahlschneiden, Ätzen oder andere chemische oder mechanische Abtragungsverfahren hergestellt. Insbesondere eignen sich Laserschneiden, Wasserstrahlen und Ätzen, um eine exakte und vorzugsweise gratfreie Kantenausbildung zu erzielen. Darüber hinaus können auch sehr geringe Spaltmaße erzielt werden.

Vorteilhafterweise ist vorgesehen, dass zumindest die Kalibrierfläche aus einem folienförmigen Material, insbesondere aus Mylar hergestellt ist. Die Dicke der Folien wird stufenweise ausgebildet, wobei vorzugsweise ab einer Dicke von 20 oder 24 µm eine stufenweise Erhöhung erfolgt. Beispielsweise kann eine weitere Abstufung für die Dicken der Kalibriervorrichtung von beispielsweise 40, 250, 500, 750 und 1500 µm usw. vorgesehen sein. Mylar ist elektrisch nichtleitend.

Für die Durchführung von magnetinduktiven Messverfahren ist vorteilhafterweise vorgesehen, dass zumindest die Kalibrierfläche aus nichtmagnetischen Metallen hergestellt ist. Vorzugsweise ist eine Folie, ein Band oder ein Blech aus nichtmagnetischem Metall vorgesehen. Bevorzugt wird der Werkstoff Cu-Be oder Neusilber eingesetzt. Weitere Materialien, die auch eine große Härte und eine geringe oder keine elektrische Leitfähigkeit aufweisen, können für das magnetinduktive Messverfahren verwendet werden.

Nach einer weiteren vorteilhaften Ausgestaltung der Erfindung ist vorgesehen, dass die zumindest eine Kalibrierfläche aus elektrisch nicht leitendem Material, insbesondere Isolierstoff, Mylar, Kunststoff hergestellt ist und für die Schichtdickenmessung nach dem Vllirbelstromverfahren eingesetzt wird.

Des Weiteren können magnetisierbare Folienmaterialien eingesetzt werden, beispielsweise zur Messung des Ferritgehaltes von austenitischen Stählen. Zu diesem Zweck werden die Folien auf elektrisch nicht leitenden, nicht magnetischen Grundwerkstoffen aufgelegt. Dadurch kann zumindest oberflächennah der Ferritgehalt ermittelt werden. Der prozentuale Anteil des Ferritgehalts kann ermittelt und ausgegeben werden. Beispielsweise ist die Bestimmung des Ferritgehaltes in Schweißnähten von austenitischen Stählen eine Größe zur Beurteilung der Qualität der Schweißnaht. Ebenso kann die Bestimmung des Ferritgehaltes in austenitsichen Stählen zur Qualitätskontrolle eingesetzt werden.

Die Erfindung sowie weitere vorteilhafte Ausführungsformen und Weiterbildungen derselben werden im Folgenden anhand den in den Zeichnungen dargestellten Beispielen näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Draufsicht auf eine erfindungsgemäße Kalibriervorrichtung,
- Figur 2: eine schematische Draufsicht auf eine erfindungsgemäße Kalibriervorrichtung auf einem Gegenstand mit gekrümmter Oberfläche,
- Figur 3: eine schematische Schnittdarstellung einer Kalibriervorrichtung während einer Messung auf einem Gegenstand mit gekrümmter Oberfläche,
- Figur 4: eine schematische Draufsicht auf eine alternative Ausführungsform einer erfindungsgemäßen Kalibriervorrichtung und
- Figur 5: eine schematische Draufsicht auf ein Mehrfachnutzen der erfindungsgemäßen Kalibriervorrichtung gemäß Figur 1.

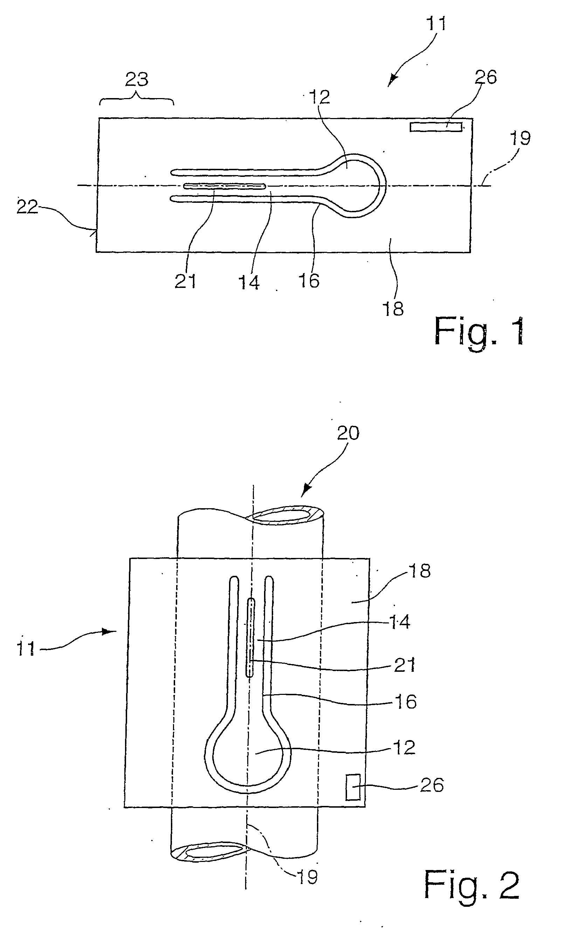

In Figur 1 ist in einer Draufsicht eine erfindungsgemäße Kalibriervorrichtung 11 dargestellt. Diese Kalibriervorrichtung 11 ist ein flächiges Gebilde, deren Dicke einer zu messenden Schichtdicke entspricht, auf welche eine nicht näher dargestellte Messeinrichtung mit einer Messsonde zu kalibrieren ist. Zunächst wird der unbeschichtete Grundwerkstoff gemessen, um die Normierung durchzuführen. Im Anschluss daran wird die Kalibriervorrichtung 11 auf den unbeschichteten Messgegenstand aufgebracht, um die Kalibrierung durchzuführen. Hierbei werden bevorzugt mehrere Messungen mit neuen Positionen auf dem Messgegenstand durchgeführt, zum eine Auswertung und eine Mittelwertbildung zu erzielen. Nach Durchführung der Kalibrierung wird in der Messeinrichtung abweichend von einer theoretisch hinterlegten Sondenkennlinie die korrigierte Sondenkennlinie abgespeichert, welche für den speziellen Messgegenstand streng gültig ist. Dieselben Gesichtspunkte gelten, wenn die Kalibrierung eines Messgerätes in Zeitabständen überprüft wird.

Die Kalibriervorrichtung 11 ist als flächiges Gebilde ausgebildet und umfasst eine Kalibrierfläche 12, welche in einen Übergangsbereich 14 übergeht. Die Kalibrierfläche 12 und der Übergangsbereich 14 sind von einem schlitzförmigen Spalt 16 umgeben, wodurch die Kalibrierfläche 12 und der Übergangsbereich 14 von dem Randbereich 18 getrennt sind. Die Kalibrierfläche 12 ist somit über den Übergangsbereich 14 mit dem Randbereich 18 verbunden. Die Ausgestaltung der Geometrie der Kalibrierfläche 12 ist beispielhaft als kreisförmige Fläche, etwa in Form eines Fächers, ausgebildet. Ebenso können andere Geometrien vorgesehen sein, wie beispielsweise ovale, eckige oder eine Kombination von eckigen und kreisförmigen Geometrien.

Gemäß dem Ausführungsbeispiel ist der Übergangsbereich 14 stegförmig ausgebildet und im Verhältnis zur Messfläche 14 lang ausgebildet. Dadurch wird eine Art zungenförmige Anordnung geschaffen, welche den Vorteil aufweist, dass durch den relativ langen und dünnen Übergangsbereich 14 die Kalibrierfläche 12 leicht aus der Ebene heraus nach oben und unten als auch um eine Längsachse 19 verdrehbar angeordnet ist.

Im stegförmigen Übergangsbereich 14 ist des Weiteren eine Durchbrechung 21 vorgesehen, welche bevorzugt in der Längsachse 19 liegt. Diese Durchbrechung 21 unterstützt die flexible und leichte Auslenkung der Kalibrierfläche 12. Gleichzeitig dient diese Durchbrechung 21 dazu, um eine gezielte und sichere Positionierung der Kalibriervorrichtung 11 auf gekrümmten oder runden Gegenständen 20, wie beispielsweise Bolzen, Rohren oder dergliechen, zu ermöglichen. Dies ist beispielhaft in Figur 2 dargestellt. Die Längsachse 19 entspricht einer Längsachse des ge- ' krümmten Gegenstandes 20. Dadurch kann eine einfache geometrische Ausrichtung erzielt werden.

Der Randbereich 18 umgibt im Ausführungsbeispiel vollständig die Kalibrierfläche 12 und den Übergangsbereich 14. Alternativ kann auch vorgesehen sein, dass der Randbereich 18 ausschließlich als Sockel ausgebildet ist und sich von einer Kante 22 bis zum Übergangsbereich 14 erstreckt. Somit wird eine Art Griffbereich 23 gebildet, der auf ein Minimum reduziert ist.

Der in Figur 1 dargestellte Randbereich 18 weist entlang einer Seitenkante eine Markierung 26 auf, welche zumindest die Dicke der Kalibiervorrichtung 11 umfasst.

Der Übergangsbereich 14 zwischen dem Randbereich 18 und der Messfläche 16 geht mit konstanten Querschnitt in die Kalibrierfläche 12 über. Alternativ kann vorgesehen sein, dass der Übergang des Übergangsbereiches 14 zur Kalibrierfläche 12 im Querschnitt verringert ist oder ein Art halsförmigen Übergang aufweist. Alternativ kann auch der gesamte Bereich 18 bei dünnen Folien verstärkt oder aufgedoppelt sein zur leichteren Handhabung.

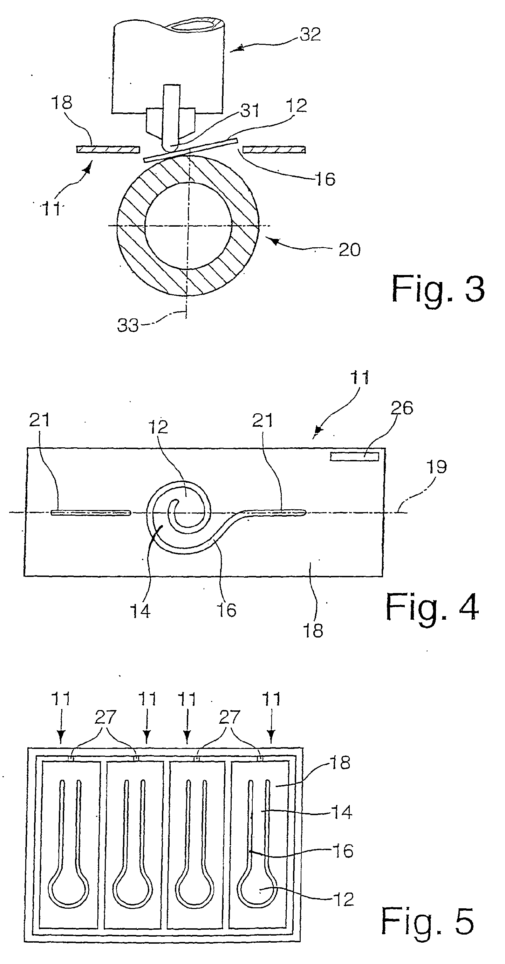

In Figur 3 ist eine schematische Schnittdarstellung einer Kalibriervorrichtung 11 während einer Messung auf einem runden Gegenstand 20 dargestellt. Eine Aufsetzkalotte 31 einer Messsonde 32 ist außerhalb einer Symmetrieachse der Kalibrierfläche 12 aufgesetzt. Durch die Ausgestaltung des Übergangsbereichs 14 ist ermöglicht, dass die Kalibrierfläche 12 aus der Ebene der Kalibriervorrichtung 11 herausbewegbar beziehungsweise leicht drehbar ist, so dass eine exakte Kalibrierung durchführbar ist. Bei der Kalibrierung ist nicht erforderlich, dass die Aufsetzkalotte 31, die eine kugelförmige Aufsetzfläche aufweist, zentral zu einer Längsmittelebene 33 des Gegenstandes 20 aufgesetzt wird. Eine Kalibrierung ist auch bei einem seitlichen Versatz, wie dies in Figur 3 dargestellt ist, ermöglicht. Dadurch wird eine Kalibrierung ermöglicht, die lediglich erfordert, dass die Messsonde 32 mit ihrer Aufsetzkalotte 31 auf der Kalibrierfläche 12 positioniert wird, wobei nicht erforderlich ist, dass die Messsonde auf einem exakten Punkt der Kalibrierfläche 12 zu positionieren ist. Dadurch kann eine schnelle Kalibrierung ermöglicht werden.

In Figur 4 ist eine alternative erfindungsgemäße Ausführungsform der Kalibriervorrichtung 11 dargestellt. Bei dieser Ausführungsform verläuft der schlitzförmig Spalt 16 schneckenlinienförmig oder schraubenlinienförmig von innen nach außen. Der schlitzförmige Spalt 16 kann auch mehrere Windungen umfassen. Diese beispielhafte Ausführungsform weist somit einen kreissegmentförmigen Übergangsbereich 14 auf. Der schlitzförmige Spalt 16 umfasst zwei Durchbrechungen 21. Die erste Durchbrechung 21 bildet eine Verlängerung der Spalte 16 und die weitere Durchbrechung 21 ist zusätzlich separat von KalibrierFläche 12 und dem Übergangsbereich 14 vorgesehen. Eine derartige separate Anordnung kann auch in Figur 1 vorgesehen sein.

In Figur 5 ist eine Draufsicht auf einen Mehrfachnutzen dargestellt. Die Kalibriervorrichtungen 11 können beispielsweise aus einem bandförmigen Material hergestellt werden, in welche durch Laserschneiden, Wasserstrahlschneiden, Ätzen oder dergleichen der zumindest eine schlitzförmige Spalt 16 und die zumindest eine Durchbrechung 21 eingebracht wird. Durch eine kontinuierliche Fertigung und der Verwendung einer Materialbahn kann eine kostengünstige Herstellung mehrerer Kalibriervorrichtungen 11 gleichzeitig mit der konstanten Dicke ermöglicht sein. Die Anzahl der Nutzen an Kalibriervorrichtungen 11 in einer Einheit sind wahlweise bestimmbar. Die Kalibriervorrichtungen 11 sind über Verbindungsstege 27 zu einem Rahmen oder einer Materialbahn gehalten. Dadurch können diese beschädigungsfrei transportiert und im Bedarfsfall durch Brechen der Verbindungsstege 27 zum Einsatz kommen.

Diese erfindungsgemäßen Kalibriervorrichtungen 11, deren Merkmale jeweils für sich erfindungswesentlich sind und beliebig miteinander kombinierbar sind, liegen auf einer gekrümmten als auch auf einer ebenen Oberfläche präzise auf und ermöglichen eine Kalibrierung der Messeinrichtung.

## Patentansprüche

1. Kalibriervorrichtung zur Anpassung einer Messeinrichtung zum Messen der Dicke von Schichten auf einem Messgegenstand (20), die als flächiges Gebilde ausgebildet ist und eine Kalibrierfläche (12) aufweist, welche eine ebene Oberseite und eine ebene Unterseite aufweist, die in einem Abstand mit einer vorbestimmten Dicke der zu messenden Schichtdicke (59, 73) vorgesehen sind, **dadurch gekennzeichnet, dass** die Kalibrierfläche (12) von einem Randbereich (18) der Kalibriervorrichtung (11) durch einen schlitzförmigen Spalt (16) getrennt und gegenüber diesem Randbereich (18) quasi frei bewegbar angeordnet ist, und dass die Kalibrierfläche (12) über zumindest einen Übergangsbereich (14) mit dem Randbereich (18) verbunden ist.

2. Kalibriervorrichtung nach Anspruch 1, **dadurch gekennzeichnet, dass** der Randbereich (18) die Kalibrierfläche (12) zumindest teilweise umgibt.

3. Kalibriervorrichtung nach Anspruch 1 oder 2, **dadurch gekennzeichnet, dass** die Größe der Kalibrierfläche (12) gleich oder größer als eine Aufsetzkalotte einer Messsonde der Messeinrichtung, vorzugsweise gleich oder größer als das Gehäuse einer Messsonde ist.

4. Kalibriervorrichtung nach einem der vorhergehenden Ansprüche, **dadurch gekennzeichnet, dass** die Kalibrierfläche (12) kreisförmig ausgebildet ist.

5. Kalibriervorrichtung nach einem der vorhergehenden Ansprüche, **dadurch gekennzeichnet, dass** die Kalibrierfläche (12), der Randbereich (18) und der Übergangsbereich (14) aus einem flächenförmigen Material hergestellt sind.

6. Kalibriervorrichtung nach einem der vorhergehenden Ansprüche, **dadurch gekennzeichnet, dass** die Kalibrierfläche (12), der Randbereich (18) und der Übergangsbereich (14) eine konstante Dicke aufweisen.

7. Kalibriervorrichtung nach einem der vorhergehenden Ansprüche, **dadurch gekennzeichnet, dass** zumindest in einer Längsachse (19) oder Querachse des Übergangsbereiches (14) eine schlitzförmige Durchbrechung (21) außerhalb der Kalibrierfläche (12) vorgesehen ist.

8. Kalibriervorrichtung nach einem der vorhergehenden Ansprüche, **dadurch gekennzeichnet, dass** der zumindest eine Übergangsbereich (14) stegförmig ausgebildet ist.

9. Kalibriervorrichtung nach Anspruch 8, **dadurch gekennzeichnet, dass** zumindest eine schlitzförmige Durchbrechung (21) im stegförmigen Bereich (14) vorgesehen ist.

10. Kalibriervorrichtung nach einem der vorhergehenden Ansprüche, **dadurch gekennzeichnet, dass** durch einen schneckenförmigen oder schraubenlinienförmigen Spalt (16) der Übergangsbereich (14) kreisförmig beziehungsweise ringförmig ausgebildet ist.

11. Kalibriervorrichtung nach Anspruch 10, **dadurch gekennzeichnet, dass** ein Teil des schnecken- oder schraubenförmigen Spaltes (16) im kreisförmigen oder ringförmigen Übergangsbereich die schlitzförmige Durchbrechung (21) als Sichtfenster bildet.

12. Kalibriervorrichtung nach einem der vorhergehenden Ansprüche, **dadurch gekennzeichnet, dass** im Randbereich (18) zumindest eine Durchbrechung (21) vorgesehen ist.

13. Kalibriervorrichtung nach einem der vorhergehenden Ansprüche, **dadurch gekennzeichnet, dass** die Kalibrierfläche (12) aus folienartigem Material hergestellt ist.

14. Kalibriervorrichtung nach einem der vorhergehenden Ansprüche, **dadurch gekennzeichnet, dass** die Kalibrierfläche (12) aus einem nichtmagnetisierbaren Material, insbesondere Mylar, Kunststoff oder Isolierstoff, hergestellt ist.

15. Kalibriervorrichtung nach einem der Ansprüche 1 bis 13, **dadurch gekennzeichnet, dass** die Kalibrierfläche (12) aus einem magnetisierbaren Material, insbesondere zur Bestimmung eines Ferritgehaltes, hergestellt ist.

## Claims

1. Calibrating device for adapting a measuring device for measuring the thickness of thin layers on an object (20) to be measured, which is provided in a planar form, comprising a calibrating surface (12) having a flat upper side and a flat underside, which are provided at a distance with a predetermined thickness, **characterized in that** the calibrating surface (12) is arranged separate from at least one edge area (18) by a slot-shaped slit (16) and is arranged quasi movable versus the edge area (18) and the calibrating surface (12) is connected to the at least one edge area (18) via at least one transition area (14).

2. Calibrating device according to claim 1, **characterized in that** the edge area (18) at least partially surrounds the calibrating surface (12).

3. Calibrating device according to claim 1 or 2, **characterized in that** the size of the calibrating surface (12) is the same as or at least slightly larger than a contact spherical cap of a measuring probe of the measuring device, preferably the same as or larger than a housing of a measuring probe.

4. Calibrating device according to any one of the preceding claims, **characterized in that** the calibrating surface (12) is circular in design.

5. Calibrating device according to any one of the preceding claims, **characterized in that** the calibrating surface (12), the edge area (18) and the transition area (14) are made of a planform material.

6. Calibrating device according to any one of the preceding claims, **characterized in that** the calibrating surface (12), the edge area (18) and the transition area (14) are of a constant thickness.

7. Calibrating device according to any one of the preceding claims, **characterized in that** a slot-shaped opening (21) is provided outside of the calibrating surface (12) - at least in one longitudinal axis (19) or transverse axis of the transition area (14).

8. Calibrating device according to any one of the preceding claims, **characterized in that** the at least one transition area (14) is ridge-shaped in design.

9. Calibrating device according to claim 8, **characterized in that** at least one slot-shaped opening (21) is provided in the ridge-shaped area (14).

10. Calibrating device according to any one of the preceding claims, **characterized in that** the transition area (14) is circular or ring-shaped in design due to a helical or spiral form of the slot-shaped slit (16).

11. Calibrating device according to claim 10, **characterized in that** the slot-shaped opening (21), which is circular or ring-shaped, is a part of the helical or spiral form of slot-shaped slit (16), which is provided as a viewing window.

12. Calibrating device according to any one of the preceding claims, **characterized in that** at least one opening (21) is provided in the edge area (18).

13. Calibrating device according to any one of the preceding claims, **characterized in that** the calibrating surface (12) is manufactured of a foil-like material.

14. Calibrating device according to any one of the preceding claims, **characterized in that** the calibrating surface (12) is manufactured of a non-magnetizable material, especially Mylar, plastic or insulating material.

15. Calibrating device according to any one of the claims 1 to 13, **characterized in that** at least one calibrating surface (12) is manufactured of a magnetizable material, especially for the determination of a ferrite content.

## Revendications

1. Dispositif d'étalonnage pour adapter un dispositif de mesure afin de mesurer l'épaisseur de couches sur un objet mesuré (20), qui est réalisé sous forme de structure plane et qui présente une surface d'étalonnage (12) qui présente un côté supérieur plan et un côté inférieur plan, qui sont espacés avec une épaisseur prédéterminée de l'épaisseur de la couche à mesurer (59, 73), **caractérisé en ce que** la surface d'étalonnage (12) est séparée d'une région de bord (18) du dispositif d'étalonnage (11) par un interstice (16) en forme de fente et est disposée de manière déplaçable pratiquement librement par rapport à cette région de bord (18), et **en ce que** la surface d'étalonnage (12) est connectée par au moins une région de transition (14) à la région de bord (18).

2. Dispositif d'étalonnage selon la revendication 1, **caractérisé en ce que** la région de bord (18) entoure au moins en partie la surface d'étalonnage (12).

3. Dispositif d'étalonnage selon la revendication 1 ou 2, **caractérisé en ce que** la taille de la surface d'étalonnage (12) est supérieure ou égale à une calotte de positionnement d'une sonde de mesure du dispositif de mesure, de préférence est supérieure ou égale au boîtier d'une sonde de mesure.

4. Dispositif d'étalonnage selon l'une quelconque des revendications précédentes, **caractérisé en ce que** la surface d'étalonnage (12) est réalisé en forme de cercle.

5. Dispositif d'étalonnage selon l'une quelconque des revendications précédentes, **caractérisé en ce que** la surface d'étalonnage (12), la région de bord (18) et la région de transition (14) sont fabriquées en un matériau en forme de nappe.

6. Dispositif d'étalonnage selon l'une quelconque des revendications précédentes, **caractérisé en ce que** la surface d'étalonnage (12), la région de bord (18) et la région de transition (14) présentent une épaisseur constante.

7. Dispositif d'étalonnage selon l'une quelconque des revendications précédentes, **caractérisé en ce qu'**au moins dans un axe longitudinal (19) ou un axe transversal de la région de transition (14) est prévue une interruption en forme de fente (21) en dehors de la surface d'étalonnage (12).

8. Dispositif d'étalonnage selon l'une quelconque des revendications précédentes, **caractérisé en ce que** l'au moins une région de transition (14) est réalisée en forme de languette.

9. Dispositif d'étalonnage selon la revendication 8, **caractérisé en ce qu'**au moins une interruption en forme de fente (21) est prévue dans la région (14) en forme de languette.

10. Dispositif d'étalonnage selon l'une quelconque des revendications précédentes, **caractérisé en ce que** la région de transition (14) est réalisée sous forme circulaire ou annulaire par un interstice (16) en forme de vis ou d'hélice.

11. Dispositif d'étalonnage selon la revendication 10, **caractérisé en ce qu'**une partie de l'interstice (16) en forme de vis ou d'hélice forme dans la région de transition circulaire ou annulaire l'interruption (21) en forme de fente en tant que fenêtre de regard.

12. Dispositif d'étalonnage selon l'une quelconque des revendications précédentes, **caractérisé en ce que** dans la région de bord (18) est prévue au moins une interruption (21).

13. Dispositif d'étalonnage selon l'une quelconque des revendications précédentes, **caractérisé en ce que** la surface d'étalonnage (12) est fabriquée sous forme de matériau de type feuille.

14. Dispositif d'étalonnage selon l'une quelconque des revendications précédentes, **caractérisé en ce que** la surface d'étalonnage est fabriquée en un matériau non aimantable, en particulier en Mylar, en plastique ou en matériau isolant.

15. Dispositif d'étalonnage selon l'une quelconque des revendications 1 à 13, **caractérisé en ce que** la surface d'étalonnage (12) est fabriquée en un matériau aimantable, en particulier pour déterminer une teneur en ferrite.
